# EUROPÄISCHE PATENTANMELDUNG

(11) **EP 1 900 782 A1**
(43) Veröffentlichungstag der Anmeldung: **19.03.2008**
(21) Anmeldenummer: 06019433.9
(22) Anmeldetag: 18.09.2006
(51) Int. Cl.: C09D 5/00, C09D 5/08, C09D 5/18, C09D 1/02, F16L 58/04, B05D 7/00

(54) **Säurebeständige Hochtemperaturbeschichtung**

(71) Anmelder: KCH Group GmbH, 56427 Siershahn (DE)
(72) Erfinder: Burkhart, Thomas, Dr., 66994 Dahn (DE); Schmidt, Ralf, 56604 Elz (DE)
(74) Vertreter: Keller, Günter

(57) **Zusammenfassung**

Offenbart werden Oberflächenbeschichtungen, bestehend aus einer Grundierung auf Basis von Vinylesterharzen oder ungesättigten Polyesterharzen und einer Deckschicht auf Basis von Wasserglas, die insbesondere säurebeständig und hochtemperaturbeständig sind.

## Beschreibung

Diese Erfindung betrifft eine Beschichtung von Oberflächen von Anlagen, Behältern und dergleichen zur Verbesserung deren Korrosions- und Hitzebeständigkeit.

Viele industrielle Anlagen werden mit Korrosionsschutzbeschichtungen versehen, um deren Beständigkeit zu verbessern. Zum Beispiel müssen Vorrichtungen zur Rauchgasentschwefelung vor den im Rauchgas enthaltenen aggressiven Chemikalien geschützt werden. Die Temperaturbeanspruchung liegt hierbei zwischen 50 und 100 °C, in den das Rauchgas führenden Rohren kann es jedoch bis zu einer Temperaturbelastung von 180 °C kommen. Des Weiteren weisen die Rauchgase stark korrodierende Inhaltsstoffe wie gelöste Salze, Gase und wässrige, saure Kondensate auf. In bestimmten Verfahrensstufen kommt jedoch auch hochkorrosive konzentrierte Säure, wie z. B. 80 %-ige Schwefelsäure vor.

Üblicherweise werden Bauteile in Rauchgasentschwefelungsanlagen oder ähnlichen chemischen Anlagen mit Korrosionsbeschichtungen auf Gummielastomer oder Polymerharzbasis versehen. In weniger belasteten Bereichen kommen Gummielastomerbeschichtungen auf der Basis von Natur- und Synthesekautschuk zum Einsatz. Hier haben sich speziell Gummibahnen aus gummiertem Gummielastomer durch ihre hervorragende Gasdichtigkeit und chemische Widerstandsfähigkeit ausgezeichnet.

Bei chemisch und thermisch stärker beanspruchten Bauteilen und Oberflächen kommen vorzugsweise Kunstharzbeschichtungen auf Vinylesterharzbasis, eventuell mit zusätzlichen Glasflakes als Barrierefüllstoffen versehen, zum Einsatz. Letztere Beschichtungen haben sich vor allem als Oberflächenschutz für Bauteile aus Stahl, die korrosiv wirkenden Stoffen auch bei hohen Temperaturen ausgesetzt sind, bewährt. Hauptanwendungsgebiete sind z.B. Kamine und Wärmetauscher in Rauchgasentschwefelungsanlagen von Kraftwerken und Abgas- bzw. Rauchgasreinigungsanlagen in der chemischen Industrie und anderer Industriezweige.

Für thermisch und chemisch hoch beanspruchte Bauteile sind weiterhin Vinylesterharzbeschichtungen mit mikrodünnen Mineralplättchen (Inertflakes) die eine parallel zum beschichteten Untergrund liegende Barriere gegenüber Permeration bilden, bekannt. Diese Beschichtungen eignen sich aufgrund der sehr hohen Temperaturbeständigkeit bei gleichzeitig sehr guter Beständigkeit gegenüber Schwefelsäure, sauren Kondensaten und Kalksuspensionen und aufgrund hoher Diffusionsdichtheit hervorragend als Oberflächenschutz von Kanälen, Kaminen und anderen Bauteilen von Rauchgasentschwefelungsanlagen.

Aufgrund von kraftwerkstechnischen Entwicklungen kommt es jedoch in Rauchgasentschwefelungsanlagen zu immer verschärfteren chemischen und thermischen Belastungen, insbesondere in den das Rauchgas führenden Kanälen, denen die zur Zeit eingesetzten Beschichtungen auf Vinylesterharzbasis mit Glas- oder Mineralplättchenflakes nicht mehr standhalten. So ist insbesondere der Korrosionsschutz bei Temperaturbelastungen von 160 - 180 °C in Anwesenheit von oxidierenden sauren Salzen oder Säuren, wie 80 %-ige Schwefelsäure (H₂SO₄), von Bauteiloberflächen nicht mehr gewährleistet.

Die Verwendung von Wasserglasbeschichtungen für chemisch und thermisch beanspruchte Oberflächen ist im Stand der Technik bekannt. Jedoch weisen herkömmliche Wasserglasschichten von chemisch und thermisch hochbeanspruchten Beschichtungen im Stand der Technik eine Mindestschichtdicke von 5 mm auf, um eine ausreichende Stabilität der Schicht sicherzustellen. Derartige Schichten sind nicht nur wegen des Raum- und Materialbedarfs unvorteilhaft.

Es besteht daher ein Bedarf an weiteren Oberflächenbeschichtungen, die derartigen chemischen und thermischen Bedingungen standhalten und somit ausreichenden Schutz vor Korrosion gewährleisten.

Die Erfindung betrifft eine Oberflächenbeschichtung, umfassend eine Grundierung auf Basis von Vinylesterharzen oder ungesättigten Polyesterharzen und einer Deckschicht auf Basis von Wasserglas.

Es hat sich gezeigt, dass eine derart als Verbundsystem aufgebaute Oberflächenbeschichtung mit einer Grundierung auf Basis von Vinylesterharz oder ungesättigten Polyesterharz und einer Deckschicht auf Basis von Wasserglas den hohen chemischen und thermischen Beanspruchungen, wie sie z.B. in den Kanälen von Rauchgasentschwefelungsanlagen auftreten, standhält. Insbesondere kann bei einem derartigen Verbundsystem die Schichtdicke der Deckschicht des Wasserglas ohne Verlust von Korrosionsschutzwirkung bei thermischer und chemischer Höchstbeanspruchung reduziert werden.

Vinylesterharze und ungesättigte Polyesterharze, wie sie für die Grundierung verwendet werden können, sind im Stand der Technik bekannt. Geeignete Vinylesterharze werden üblicherweise durch Addition der Carboxylgruppe von Acryl- oder Methacrylsäure an die endständigen Epoxidgruppen von Bisphenol-A-diglycidylether gebildet. Das Molekül enthält nur endständige, hochreaktive Doppelbindungen, die einen hohen Vernetzungsgrad gewährleisten. Der Bisphenolteil ist für die hohen Festigkeitswerte des ausgehärteten Produkts verantwortlich. Neben der stabilen Polyether-Struktur sind nur noch zwei endständige Estergruppen am Molekülaufbau beteiligt, daher sind Vinylesterharze oxidationsstabil und verseifungsbeständig. Sie bieten insbesondere genügende Festigkeit und Temperaturbeständigkeit, um als Grundierung für die Deckschicht auf Basis von Wasserglas, die der chemischen Beanspruchung ausgesetzt ist, zu dienen.

Geeignete ungesättigte Polyesterharze sind Lösungen eines zähflüssigen bis festen ungesättigten Polyesters in einem reaktiven Lösungsmittel, das bei der Vernetzung als copolymerisierbares Monomer wirkt. Als reaktives Lösungsmittel wird vor allem Styrol verwendet. Der massenbezogene Styrolgehalt der meisten Harze liegt zwischen 30 % und 45 %. Der lineare Polyester wird durch Polykondensation (Veresterung) einer ungesättigten und einer gesättigten Dicarbonsäure mit einem Dialkohol (enthält zwei funktionelle HydroxyGruppen) hergestellt. Anstelle der Dicarbonsäuren können auch die entsprechenden Anhydride eingesetzt werden.

Nach Zugabe eines Initiators (beispielsweise Peroxid) zum Stammharz erfolgt eine vernetzende Polymerisation durch Einbau von oligomeren Styrolbrücken zwischen den Doppelbindungen des Polyesters. Durch Einsatz von Härtern, Beschleunigern und Inhibitoren verschiedener Art und Menge kann die Herstellungsgeschwindigkeit (Verarbeitungszeit) breit variiert werden. Aufgrund des großen Sortiments an Ausgangsstoffen und ihrer unterschiedlichen Kombinierbarkeit ist die Herstellung einer Vielzahl von Harztypen mit unterschiedlichen Eigenschaften möglich.

In Abhängigkeit vom Anteil an ungesättigter Dicarbonsäure an der Zusammensetzung des Polyesters kann die Zahl der reaktiven Doppelbindungen pro Molekül (üblicherweise 2-16 Doppelbindungen) und damit die Reaktivität des ungesättigten Polyesters gegenüber Styrol unterschiedlich sein. Die meisten verfügbaren ungesättigten Polyesterharze enthalten Maleinsäure oder Fumarsäure als ungesättigte Dicarbonsäurekomponente. Weitere Dicarbonsäuren, die für die Herstellung der entsprechenden ungesättigten Polyesterharze verwendet werden können, sind Isophthalsäure, Orthophthalsäure, Ethylendicarbonsäuren, Acryl- und Methacrylsäure. Neben diesen Dicarbonsäuren finden auch chlorhaltige organische Säuren wie z.B. die HET-Säure (Hexachloroendomethylentetrahydrophthalsäure) Verwendung.

Die Wahl der glykolischen (dialkoholischen) Komponente ist für die Styrolverträglichkeit der ungesättigten Polyester und die Beständigkeit der ausgehärteten Produkte von Bedeutung. Für viele Standardharze wird Propylenglykol eingesetzt. Neben relativ einfach aufgebauten Glykolen wie z.B. Ethylenglykol, Propylenglykol-1,2, Diethylenglykol und Dipropylenglykol finden auch andere Glykole Verwendung wie Neopenthylglykol, ethoxyliertes oder propoxyliertes Bisphenol, wie Bisphenol-A-diglycidylether.
In einer Ausführungsform enthalten die Harzzusammensetzungen der Grundierung der erfindungsgemäßen Oberflächenbeschichtung weiterhin 0-4 Gew.-% Verlaufmittel, Entlüfter, Entschäumer und Benetzungsmittel, 0-5 Gew.-% Haftvermittler und Hydrophobierungsmittel, 0-30 Gew.-% Farbstoffe und Pigmente, 0-70 Gew.-% Füllstoffe, 0-7 Gew.-% Thixotropier-und Verdickungsmittel, 0-10 Gew.-% Lösungsmittel, bezogen auf das Gesamtgewicht der Zusammensetzung.

In einer bevorzugten Ausführungsform werden die Harzzusammensetzungen der Grundierung der erfindungsgemäßen Oberflächenbeschichtung nach Mischung mit einem Härter im Verhältnis von 99:1 bis 95:5, insbesondere 99:1 bis 97:3 selbsthärtend und somit gebrauchsfertig. Die Zugabe des Härters erfolgt üblicherweise unmittelbar vor Gebrauch der Zusammensetzungen.

In einer weiteren bevorzugten Ausführungsform wird der Härter ausgewählt aus der Gruppe der Peroxide, umfassend Methylethylketonperoxid, t-Butylperoxidbenzonat, Benzoylperoxid und Dicumylperoxid, z.B. Butanox M-50.

Beide Komponenten, Vinylesterharz- bzw. ungesättigte Polyesterharz-Zusammensetzungen der Grundierung der erfindungsgemäßen Oberflächenbeschichtung und Härter, werden getrennt gelagert und die verarbeitungsfertige Mischung wird kurz vor Gebrauch durch Vermischen der beiden Komponenten hergestellt.

In einer Ausführungsform kann zur weiteren Stabilisierung der Grundierungsschicht, um eventuell bei der Polymerisation eintretenden Schrumpf zu verhindern und eine ausreichende Rissüberbrückung zu realisieren, in die Grundierung eine Armierung eingebettet sein. Diese Armierung kann als Waben- oder Gitterlage aus Glas, Metall, Kohlenstoff oder Kunstharz, insbesondere Polyester ausgebildet sein. Am häufigsten werden Glasfasermatter und/oder Glasfasergewebe mit einem Flächengewicht (flächenbezogene Massen, Massenbedeckung) von 200 - 450 g/m² insbesondere 300 - 400 g/m² verwendet.

In einer weiteren Ausführungsform der erfindungsgemäßen Oberflächenbeschichtung ist zwischen Grundierung und Deckschicht zusätzlich eine Abstreuschicht vorhanden. Als Abstreumaterial kann jedes vorwiegend körnige Material, das zur Haftvermittlung zwischen Grundierung und Deckschicht geeignet ist verwendet werden. Vorzugsweise werden Quarzkörner, insbesondere mit Körnung von 0,3 - 0,9 mm eingesetzt. Das Abstreumaterial wird vorzugsweise im Überschuss aufgetragen.
Die erfindungsgemäße Deckschicht auf Basis von Wasserglas enthält von 10 - 80 Gew.-% an Wasserglas vorzugsweise 15 - 60 Gew.-%, insbesondere 20 - 50 Gew.-% an Wasserglas. Als Wasserglas können Lithium-, Natrium- oder Kaliwasserglas, vorzugsweise Kaliwasserglas verwendet werden. Unter Wasserglas werden erstarrte, glasige, wasserlösliche Salze von Kieselsäuren oder deren viskose wässrige Lösungen verstanden. Die Deckschicht auf Basis von Wasserglas enthält des Weiteren 20 - 90 Gew.-%, vorzugsweise 40 - 85 Gew.-%, silikathaltige Füllstoffe, insbesondere Quarzsand, wie Quarzsand einer Körnung von 0,23 - 0,25 mm (z.B. F32 Quarzsand Frechen, Quarzwerke), Glasflakes oder Glaspulver, wie amorphe Siliciumdioxiodpulver (z.B. Microsilica 940 US) und Gemische dieser. Des weiteren kann die Deckschicht auf Basis von Wasserglas 5 - 30 Gew.-%, vorzugsweise 10 - 25 Gew.-%, weitere Füllstoffe, Härtungsmodifikatoren und sonstige Hilfsstoffe wie Dispergiermittel, Flussmittel, Benetzer, Stellmittel und Pigmente enthalten, die jedoch so ausgewählt werden müssen, dass die chemische und thermische Belastbarkeit der Deckschicht gewährleistet bleibt. Geeignete Dispergiermittel sind z. B. solche auf Basis von Aluminiumphosphat (z. B. Fabutit 758), geeignete Benetzer sind z. B. solche auf Basis pulverförmiger Tenside wie Genapol PF 80, geeignete Pigmente sind solche auf Basis von Titandioxid, wie Kronos 2056 und als Stellmittel kann z. B. Hostapulp Typ F PE 940 T verwendet werden. Als weitere Füllstoffe können Mischungen aus Silicium-, Aluminium- und Eisenoxid, wie Steinkohleflugasche verwendet werden, z. B. Steament H4. Die Summe der Gewichtsanteile muss 100 % ergeben.

In einer bevorzugten Ausführung wird die gegebenenfalls armierte Grundierung mit der gegebenenfalls vorhandenen Abstreuschicht mit einer Wasserglaslösung vorbehandelt, die 20 - 100 Gew.-% Wasserglas, vorzugsweise 30 - 80 Gew.-%, insbesondere 40 - 60 Gew.-% Wasserglas enthält. Die Wasserglaslösung kann von 10 bis 80 Gew.-%, vorzugsweise von 20 - 70 Gew.-%, silikathaltige Füllstoffe wie Glaspulver und andere Hilfsstoffe wie solche auf Basis von Aluminiumphosphat (z.B. Fabutit 758) und Flussmittel enthalten. Die Summe der Gewichtsanteile muss 100 % ergeben. Durch den Auftrag der Wasserglaslösung wird insbesondere der Kontakt zwischen Grundierung bzw. Abstreuschicht und der Deckschicht auf Basis von Wasserglas, die vorzugsweise zähere Konsistenz als die Wasserglaslösung aufweist, verbessert.

In einer bevorzugten Ausführungsform wird die Deckschicht auf Basis von Wasserglas in Form einer Spachtel- oder Kittmasse, vorzugsweise in Form einer streichfesten, pastösen Masse, aufgetragen. Hierdurch wird eine Applikation mit gleichmäßiger Dicke, hoher Glattheit und ausgezeichnetem Kontakt mit der vorzugsweise mit Wasserglaslösung vorbehandelten Grundierungsschicht erreicht. Insbesondere wird durch die Applikation einer viskosen Masse gewährleistet, dass eine geschlossene Deckschicht auf Basis von Wasserglas vorhanden ist, um den lückenlosen Korrosionsschutz gegenüber der Grundierung und der Trägeroberfläche zu gewährleisten. Die Schichtdicke der Deckschicht auf Basis von Wasserglas ist im Allgemeinen unter 5 mm, vorzugsweise 1-4 mm, insbesondere 2-3 mm.

In einer weiteren bevorzugten Ausführungsform wird auf die ausgehärtete Deckschicht auf Basis von Wasserglas in einem anschließenden Arbeitsgang die Wasserglaslösung, die als Zwischenschicht auf die Grundierung aufgetragen werden kann, aufgegeben, um eventuelle feine Risse oder Poren der Deckschicht auf der Basis von Wasserglas zu schließen.

Die erfindungsgemäße Oberflächenbeschichtung auf Basis von Wasserglas ist nach der Applikation auf die zu schützende Oberfläche nach dem Aushärten bei Raumtemperatur auch ohne Erhitzen korrosionsbeständig gegen Schwefelsäure. Ein anschließendes Erhitzen erhöht die Beständigkeit, insbesondere gegenüber Wasser, zusätzlich.

Weiter betrifft die Erfindung ein Verfahren zur Herstellung einer Oberflächenbeschichtung, das dadurch gekennzeichnet ist, dass zuerst eine Grundierung auf Basis von Vinylesterharzen oder ungesättigten Polyesterharzen, gegebenenfalls eine Abstreuschicht, schließlich eine Deckschicht auf Basis von Wasserglas aufgetragen werden.

In einer bevorzugten Ausführung des erfindungsgemäßen Verfahren wird die Oberflächenbeschichtung auf einer metallischen Oberfläche hergestellt, insbesondere einer Stahloberfläche.

Weiter betrifft die Erfindung die Verwendung der erfindungsgemäßen Oberflächenbeschichtung auf metallischen Oberflächen, insbesondere Konstruktionen aus Stahl in Rauchgasentschwefelungsanlagen, Rauchgaskanälen, Kaminen, Wärmetauschen, Absorptionstürmen und Aufbereitungsanlagen der chemischen Industrie.

Durch die Oberflächenbeschichtung der vorliegenden Erfindung wird ein Korrosionsschutz für chemisch und thermisch höchst beanspruchte Oberflächen zur Verfügung gestellt, die insbesondere Korrosionsbeständigkeit gegen oxidierende Säuren, wie 80 %-ige Schwefelsäure, bei einer thermischen Belastung von bis zu 180°C gewährleistet (Säurebeständigkeit in Anlehnung an DIN 51102 Teil 1, wobei bei 150°C-180°C in 85%iger Schwefelsäure geprüft wird). Durch den erfindungsgemäßen Aufbau der Oberflächenbeschichtung als Verbundsystem aus einer hochbeständigen Grundierung auf Basis von Vinylesterharz oder ungesättigtem Polyesterharz und einer Deckschicht auf Basis von Wasserglas kann weiterhin die nötige Schichtdicke der Deckschicht aus Wasserglas auf unter 5 mm reduziert werden. So konnte eine Oberflächenbeschichtung mit einer Schichtdicke der Deckschicht auf Basis von Wasserglas von 2 mm ein vorgenannter Korrosionsschutz für chemisch und thermisch höchstbeanspruchte Oberflächen erreicht werden.

Die Erfindung wird durch die nachfolgenden Beispiele näher erläutert.

### Beispiel 1:

Vinylesterharzzusammensetzung für eine Grundierung der säurebeständigen Hochtemperaturbeschichtung.

Die nachstehend genannten Bestandteile wurden in einem Disolver zu einer Vinylesterharzzusammensetzung vermischt:

| **Vinylesterharzzusammensetzung** | |
|---|---|
| Derakane 8090 | 98,2 |
| Beschleuniger NL 49 P | 1,5 |
| Inhibitor TC 510 | 0,3 |
| **Summe** | **100,00** |

Zu diesen hundert Teilen der Vinylesterharzzusammensetzung wurden unmittelbar vor der Applikation 2 Teile eines Methylethylketonperoxydhärters (Butanox M50) gemischt. Die erhaltene Mischung wurde so homogenisiert, dass mit bloßem Auge keine Inhomogenitäten mehr erkennbar waren.

### Beispiel 2:

### Zusammensetzung der Deckschicht auf Basis von Wasserglas (z. B. Spachtel oder Kitt)

| **KCH Pulver 8S** | |
|---|---|
| Quarzsand Frechen F32 | 41,40 |
| Glasflake 1/8 Inch | 15,00 |
| Microsilica 940 US | 10,00 |
| Fabutit 758 | 6,00 |
| Trialuphosphat schwer (Aluminiumphosphat) | 0,80 |
| Genapol PF 80 | 1,00 |
| Steament H4 | 20,00 |
| Kronos 2056 | 5,00 |
| Hostapulp Typ F PE 940 T | 0,80 |
| **Summe** | **100,00** |

| **KCH Lösung 8** | |
|---|---|
| Silirit M 80 | 89 |
| H₂O | 10 |
| Rewopol B 2003 | 1 |
| **Summe** | **100,00** |

Durch Vermengen von 210 Teilen KCH Pulver 8S mit 100 Teilen KCH Lösung 8 wurde eine streichfeste Spachtel für die Deckschicht auf Basis von Wasserglas hergestellt.

### Beispiel 3:

### Wasserglaslösung für die Zwischen- und Deckschicht

| **KCH Pulver 8V** | |
|---|---|
| Microsilica 940 US | 88,89 |
| Fabutit 758 | 10 |
| Trialuphosphat schwer | 1,11 |
| **Summe** | **100** |

Durch Vermischen von 90 Teilen des KCH Pulver 8V mit 100 Teilen der KCH Lösung 8 (siehe Bsp. 2) wurde eine Wasserglaslösung zur Verwendung als Zwischenschicht und Deckschichtabschluss hergestellt.

### Beispiel 4:

### Applikation und Prüfung der säurebeständigen Hochtemperaturbeschichtung

Auf einer der DIN EN 14879/1 entsprechenden Stahlkonstruktion, die nach DIN EN ISO 12944-4 vorbereitet wurde und einen Rauigkeitsgrad "medium (G)" aufwies, wurde die Grundierung der Oberflächenbeschichtung aus Beispiel 1 aufgetragen. Auf die nasse Grundierung wurde eine Armierung (KCH-Matte-300, Glasfasermatte, pulvergebunden, 300 g/m², 30 tex, E-Glas) aufgelegt und weitere Grundierung aufgetragen. Die Grundierung wurde mit Quarzsand, Korngröße 0,3 - 0,9 mm im Überschuss abgesandet. Nach dem Entfernen des überschüssigen Quarzsandes wurde eine Zwischenschicht aus Wasserglaslösung (KCH Pulver 8V und KCH Lösung 8) gemäß Beispiel 3 appliziert. Anschließend wurde die Deckschicht auf Basis von Wasserglas als Spachtel (KCH Pulver 8S und KCH Lösung 8) gemäß Beispiel 2 in einem Arbeitsgang in einer Schichtdicke von 2 mm aufgespachtelt und mit einer trockenen Rolle leicht geglättet. Auf die ausgehärtete Deckschicht auf Basis von Wasserglas wurde nochmals die Wasserglaslösung (KCH Pulver 8V und KCH Lösung 8) gemäß Beispiel 3 aufgerollt.

Die erhaltene, ausgehärtete Beschichtung wies eine Beständigkeit gegenüber 80 %-iger Schwefelsäure bei einer Temperaturbelastung bis 180 °C auf (Säurebeständigkeit in Anlehnung an DIN 51102 Teil 1, wobei bei 150°C-180°C in 85%iger Schwefelsäure geprüft wird).

## Patentansprüche

1. Oberflächenbeschichtung, umfassend eine Grundierung auf Basis von Vinylesterharzen oder ungesättigten Polyesterharzen und einer Deckschicht auf Basis von Wasserglas.

2. Oberflächenbeschichtung gemäß Anspruch 1, wobei die Deckschicht auf Basis von Wasserglas eine Schichtdicke von unter 5 mm aufweist.

3. Oberflächenbeschichtung gemäß Ansprüchen 1 oder 2, die weiterhin eine Armierung enthält.

4. Oberflächenbeschichtung gemäß einem der Ansprüche 1-3, die weiterhin Glaspartikel enthält.

5. Oberflächenbeschichtung gemäß einem der Ansprüche 1-4, **dadurch gekennzeichnet, dass** die Deckschicht gegen oxidierende, konzentrierte Säuren korrosionsbeständig ist.

6. Oberflächenbeschichtung gemäß Anspruch 5, **dadurch gekennzeichnet, dass** die Deckschicht gegen 80 %-ige Schwefelsäure korrosionsbeständig ist.

7. Oberflächenbeschichtung gemäß einem der vorigen Ansprüche, wobei zwischen Grundierung und Deckschicht zusätzlich eine Abstreuschicht vorhanden ist.

8. Verfahren zur Herstellung einer Oberflächenbeschichtung, **dadurch gekennzeichnet, dass** zuerst eine Grundierung auf Basis von Vinylesterharzen oder ungesättigten Polyesterharzen, gegebenenfalls eine Abstreuschicht und schließlich eine Deckschicht auf Basis von Wasserglas aufgetragen wird.

9. Verfahren gemäß Anspruch 8, **dadurch gekennzeichnet, dass** eine metallische Oberfläche beschichtet wird.

10. Verwendung von Oberflächenbeschichtung nach Ansprüchen 1-7 auf metallischen Oberflächen.

11. Verwendung nach Anspruch 10, **dadurch gekennzeichnet, dass** die Oberflächenbeschichtung auf Oberflächen von Bauteilen und Konstruktionen in Rauchgasentschwefelungsanlagen, Rauchgaskanälen, Kaminen, Wärmetauschern, Absorptionstürmen und Aufbereitungsanlagen der chemischen Industrie verwendet werden.

## Geänderte Patentansprüche

### Geänderte Patentansprüche gemäss Regel 137(2) EPÜ.

**1.** Oberflächenbeschichtung, umfassend eine Grundierung auf Basis von Vinylesterharzen oder ungesättigten Polyesterharzen und einer Deckschicht auf Basis von Wasserglas.

**2.** Oberflächenbeschichtung gemäß Anspruch 1, wobei die Deckschicht auf Basis von Wasserglas eine Schichtdicke von unter 5 mm aufweist.

**3.** Oberflächenbeschichtung gemäß Ansprüchen 1 oder 2, die weiterhin eine Armierung enthält.

**4.** Oberflächenbeschichtung gemäß einem der Ansprüche 1-3, die weiterhin Glaspartikel enthält.

**5.** Oberflächenbeschichtung gemäß einem der Ansprüche 1-4, **dadurch gekennzeichnet, dass** die Deckschicht gegen oxidierende, konzentrierte Säuren korrosionsbeständig ist.

**6.** Oberflächenbeschichtung gemäß Anspruch 5, **dadurch gekennzeichnet, dass** die Deckschicht gegen 80 %-ige Schwefelsäure korrosionsbeständig ist.

**7.** Oberflächenbeschichtung gemäß einem der vorigen Ansprüche, wobei zwischen Grundierung und Deckschicht zusätzlich eine Abstreuschicht vorhanden ist.

**8.** Verfahren zur Herstellung einer Oberflächenbeschichtung, **dadurch gekennzeichnet, dass** zuerst eine Grundierung auf Basis von Vinylesterharzen oder ungesättigten Polyesterharzen und schließlich eine Deckschicht auf Basis von Wasserglas aufgetragen wird.

**9.** Verfahren gemäß Anspruch 8, **dadurch gekennzeichnet, dass** zuerst eine Grundierung auf Basis von Vinylesterharzen oder ungesättigten Polyesterharzen, eine Abstreuschicht und schließlich eine Deckschicht auf Basis von Wasserglas aufgetragen wird.

**10.** Verfahren gemäß einem der Ansprüche 8 oder 9, **dadurch gekennzeichnet, dass** eine metallische Oberfläche beschichtet wird.

**11.** Verwendung der Oberflächenbeschichtung nach Ansprüchen 1-7 auf metallischen Oberflächen.

**12.** Verwendung nach Anspruch 11, **dadurch gekennzeichnet, dass** die Oberflächenbeschichtung auf Oberflächen von Bauteilen und Konstruktionen in Rauchgasentschwefelungsanlagen, Rauchgaskanälen, Kaminen, Wärmetauschern, Absorptionstürmen und Aufbereitungsanlagen der chemischen Industrie verwendet wird.
